# EUROPÄISCHE PATENTANMELDUNG

(11) **EP 3 959 985 A1**
(43) Veröffentlichungstag der Anmeldung: **02.03.2022**
(21) Anmeldenummer: 21190967.6
(22) Anmeldetag: 12.08.2021
(51) Int. Cl.: A23B 5/00, B65D 85/32, A47J 29/06, A47G 19/28

(54) **EIERLAGERTELLER**

(30) Priorität: 01.09.2020 DE 102020122789
(71) Anmelder: Denk Keramische Werkstätten e. K., 96450 Coburg (DE)
(72) Erfinder: Denk, Fabian, 96450 Coburg (DE); Galmarini, Luca, 10081 Castellamonte (IT)
(74) Vertreter: Engel, Christoph Klaus

(57) **Zusammenfassung**

Die Erfindung betrifft einen Eierlagerteller mit einer Standfläche (02), einer Eierauflagefläche (01) und mindestens einer äußeren Umfangsfläche (03). Die Eierauflagefläche (01) besitzt eine Laufbahn (07), die sich von einem Hochpunkt (08) bis zu einem Tiefpunkt (09) erstreckt, wobei in Richtung der Flächennormalen der Standfläche (02) der Hochpunkt (08) am weitesten und der Tiefpunkt (09) am wenigsten von der Standfläche (02) beabstandet ist. Die Laufbahn (07) verläuft zwischen dem Hochpunkt (08) und dem Tiefpunkt (09) mit stetigem Gefälle. Die Laufbahn (07) besitzt eine Krümmung, sodass die Mittellinie (14) der Laufbahn (07) in der Projektion auf die Standfläche (02) am Hochpunkt (08) radial nicht oder um nicht mehr als die Hälfte einer Laufbahnbreite gegenüber dem Tiefpunkt (09) versetzt ist. Die Laufbahn (07) ist im Querschnitt im Wesentlichen konvex geformt und die Laufbahnbreite entspricht zwischen 80% bis 120% der Längserstreckung eines durchschnittlichen zu lagernden Eies (11).

## Beschreibung

Die Erfindung betrifft einen Eierlagerteller mit einer Standfläche, einer Eierauflagefläche und mindestens einer äußeren Umfangsfläche, welche sich zwischen der Standfläche und der Eierauflagefläche erstreckt. Der Eierlagerteller eignet sich insbesondere zur natürlichen, bakteriengeschützten und vorzugsweise auch kühlungsfreien Lagerung von Hühnereiern.

Vom Erzeuger werden Hühnereier üblicherweise in Schutzverpackungen, in denen 6, 10 oder 12 Eier in stehender Lage einsortiert sind zum Einzelhandel geliefert und dort an den Verbraucher abgegeben. Ebenso sind stapelbare Eierpaletten bekannt, mit denen größere Stückzahlen an die Gastronomie oder ähnliche Kunden mit höherem Verbrauch geliefert werden. Auch in den Paletten sind die Eier in stehender Lage angeordnet.

Hühnereier werden z.B. in Haushalten und in der Gastronomie nach dem Erwerb üblicherweise über mehrere Tage gelagert, bevor sie dem Verzehr zugeführt werden. Heutzutage werden die Eier zumeist in Kühlschränken oder Kühlkammern gelagert, da die Annahme verbreitet ist, dass gekühlte Eier länger haltbar wären und mögliche Gesundheitsschäden durch Krankheitserreger, insbesondere durch Salmonellen, durch Kühlung besser vermieden werden könnten.

Die natürliche Lage eines Eies ist aufgrund seiner ovoiden Form jedoch die liegende Lage, so wie das Ei unter natürlichen Bedingungen im Nest eines Huhns liegen würde. In dieser liegenden Lage wird das Eigelb durch die sogenannte Hagelschnur im Zentrum des Eies gehalten, so dass es keinen Kontakt zur Luftkammer im Ei hat. Wird das Ei nun wie in der Praxis üblich stehend transportiert und gelagert, erschlafft die Hagelschnur durch die nicht naturgerechte Position und das Eigelb kann Kontakt zur Luftkammer bekommen. Dann können sich im Ei Bakterien entwickeln. Gleiches kann durch Kontakt zur permeablen Schalenhaut geschehen. Die stehende Lagerung eines Eies kann somit zur Bakterienbildung und zum schnelleren Verderb des Eies führen. Um dem entgegen zu wirken, wird das Ei von den meisten Verbrauchern nach dem Erwerb gekühlt aufbewahrt.

Die DE 10 2016 006 219 A1 zeigt beispielhaft eine Eierablage mit Öffnungen zum Halten einer Mehrzahl von Eiern, vorzugsweise für die Verwendung als Ablagebereich in einem Kühlschrank. Diese Eierablage besitzt eine Oberseite und eine Unterseite, wobei Öffnungen auf der Oberseite teilweise größer oder kleiner sind als auf der Unterseite. Die Eierablage dient der platzsparenden, stehenden Ablage von Eiern mit unterschiedlicher Größe.

Bei einer Lagerung von Eiern im Kühlschrank können diese Gerüche anderer dort gelagerter Lebensmittel annehmen. Außerdem besteht das Problem, dass Eier, die üblicherweise in der Eierablage an der Innenseite der Kühlschranktüre aufbewahrt werden, häufigen Temperaturwechseln beim Türöffnen ausgesetzt sind, wodurch die Schutzmembran (Schalenhaut) des Eies beschädigt werden kann. Eine Beschädigung dieser Membran kann zu unerwünschtem Bakterienwachstum führen. Nachteilig ist auch, dass z. B. bei der Herstellung von Backwaren die verwendeten Eier bei Raumtemperatur verarbeitet werden sollen. Dies erfordert ein frühzeitiges Herausnehmen der Eier aus dem Kühlschrank. Schließlich wirkt sich der erforderliche Energieaufwand des Kühlens der Eier negativ auf die Gesamtenergiebilanz im Haushalt aus.

Eine Aufgabe der Erfindung besteht darin, einen Eierlagerteller bereitzustellen, der eine Lagerung von mehreren Eiern unter Vermeidung der o.g. Nachteile ermöglicht. Insbesondere sollen die Eier über mehrere Tage so gelagert werden, dass eine Kontamination durch Bakterien weitgehend ausgeschlossen wird, ohne dass dafür die Kühlung der Eier erforderlich ist. Vorzugsweise soll außerdem es möglich sein, aus der Lage der Eier ohne weitere Kennzeichnungen zu erkennen, welches der Eier am längsten lagert und daher zuerst verbraucht werden sollte.

Die genannte Aufgabe wird durch einen Eierlagerteller gemäß dem beigefügten Anspruch 1 gelöst.

Die Erfindung beruht zunächst auf der Erkenntnis, dass unter verbesserten Lagerungsumständen eine gekühlte Lagerung der Eier nicht notwendig ist, ohne dass daraus eine schlechtere Haltbarkeit oder gesteigerte gesundheitliche Risiken resultieren. Wird nämlich das Ei auch bei seiner Lagerung beim Verbraucher in seiner natürlichen Seitenlage belassen, so verhindert dies die Keimbildung im Ei bereits deutlich. Denn das Eiklar weist von Natur aus bakterizide Eigenschaften auf, während das Eigelb nicht über solche Sicherheitsmechanismen verfügt. Eine weitere Verbesserung ist zu erzielen, wenn die Hagelschnur nicht gravitationsbedingt über lange Zeit nur in einer Richtung belastet wird, sondern durch eine gelegentliche Rotation des Eies um seine Längsachse ausgleichende Bedingungen geschaffen werden. Die Hagelschnur bleibt dadurch straff und flexibel. Das Eigelb wird dann vor einem Kontakt zur Luftkammer und zur permeablen Schalenhaut bewahrt, was eine Bakterienentwicklung im Eigelb vermeidet.

Um diese Erkenntnisse in eine technische Lösung der o.g. Aufgabe umzusetzen besitzt der erfindungsgemäße Eierlagerteller eine Standfläche, die als geschlossene oder geöffnete Fläche ausgebildet sein kann und das Aufstellen des Eierlagertellers z.B. auf einer Arbeitsfläche oder dergleichen gestattet. Weiterhin besitzt der Eierlagerteller eine Eierauflagefläche, welche der Standfläche im Wesentlichen gegenüberliegt, jedoch partiell unterschiedlich von dieser beabstandet ist. Die Eierauflagefläche besitzt eine Laufbahn, die sich von einem Hochpunkt bis zu einem Tiefpunkt erstreckt, wobei in Richtung der Flächennormalen der Standfläche der Hochpunkt am weitesten und der Tiefpunkt am wenigsten von der Standfläche beabstandet ist. Die Laufbahn verläuft zwischen dem Hochpunkt und dem Tiefpunkt ohne Unstetigkeitsstellen und ohne Umkehrpunkte, vorzugsweise mit einer gleichbleibenden negativen Steigung bzw. einem Gefälle vom Hochpunkt zum Tiefpunkt. Die Steigung ist so gewählt, dass aufgelegte Eier selbsttätig vom Hochpunkt zum Tiefpunkt rollen. Die Laufbahn besitzt außerdem eine Krümmung, sodass die Mittellinie der Laufbahn, gesehen in ihrer Projektion auf die Standfläche, am Hochpunkt radial nicht oder um nicht mehr als die Hälfte der Laufbahnbreite gegenüber dem Tiefpunkt versetzt ist. Bevorzugt beschreibt die Projektion der Mittellinie der Laufbahn demnach im Wesentlichen einen Kreisbahnabschnitt, besonders bevorzugt über einen Winkelbereich von mehr als 275°. Die Laufbahn ist im Querschnitt gesehen im Wesentlichen konvex geformt und besitzt eine Laufbahnbreite, die an die Längserstreckung eines zu lagernden Eies angepasst ist und etwa 80% bis 120% der Längserstreckung eines durchschnittlichen Hühnereis entspricht. Schließlich ist mindestens eine äußere Umfangsfläche vorgesehen, welche sich zwischen der Standfläche und der Eierauflagefläche erstreckt und damit den Körper des Eierlagertellers auf der äußeren Umfangsfläche begrenzt.

Durch die konstruktive Gestaltung des Eierlagertellers ist sichergestellt, dass die auf der Laufbahn der Eierauflagefläche aufgelegten Eier dauerhaft in liegender Lage sind, denn die Laufbahnbreite ist so gewählt, dass jedes aufgelegte Ei nicht in stehender Position verbleiben kann sondern schwerkraftbedingt in die liegende Position übergeht, wobei die konvexe Querschnittsform zu einer mindestens linienförmigen bzw. flächigen Anlage des Eies an der Laufbahnoberfläche führt. Außerdem führt das Gefälle der Laufbahn dazu, dass alle aufgelegten Eier selbsttätig in Richtung des Tiefpunktes streben. Die Laufbahn stellt eine stabile Bahn für ein sicheres Rollen der Eier um ihre Längsachse bereit. Sobald am Tiefpunkt ein Ei entnommen wird, rollen die weiteren Eier auf der Laufbahn nach und werden in der gewünschten Art um mehrere Grad gedreht, was zu einer Entlastung der Hagelschnur führt.

Gemäß einer bevorzugten Ausführungsform ist die Laufbahn an ihrer Außenkante von der äußeren Umfangsfläche und an ihrer Innenkante von einer inneren Umfangsfläche begrenzt. Die beiden Umfangsflächen erstrecken sich zwischen der Standfläche und der Eierauflagefläche, sodass der Eierlagerteller eine dreidimensionale Form erhält, die vorzugsweise keine scharfen Kanten oder Ecken aufweist. Besonders bevorzugt umschließt die innere Umfangsfläche eine zentrale Ausnehmung. Weiterhin ist es vorteilhaft, wenn die innere und die äußere Umfangsfläche aufeinander zu geneigt sind, sodass sie einen Abschnitt eines Kegelstumpfes einschließen. Die Laufbahn beschreibt dann eine Schraubenlinie, welche in einer zur Rotationsachse geneigten Schnittebene des Kegelstumpfes verläuft. Die zentrale Ausnehmung bewirkt eine Material- und Gewichtseinsparung und gestattet gleichzeitig ein komfortables Greifen des Eierlagertellers durch den Benutzer.

Eine vorteilhafte Ausführungsform zeichnet sich dadurch aus, dass der gesamte Eierlagerteller einstückig aus einem keramischen Material geformt ist. Die gesinterte Keramik ist dicht gebrannt, chemisch inert, nimmt keine Bakterien und Gerüche auf und kann sowohl mit einer Seifenlösung als auch bei besonderen Anforderungen mit schwachen Säuren und Laugen gereinigt werden. Durch Herstellung in Ausformtechnik oder Gießtechnik kann die Materialstärke relativ dünn und damit der Eierlagerteller insgesamt leicht gehalten werden.

Besonders bevorzugt besteht der Eierlagerteller aus einer nicht-glasierten Keramik, deren Keramikrohmasse im Herstellungsprozess Titandioxid beigemischt wurde. Dadurch wird eine bakterizide Oberfläche erzeugt. Das derart ausgerüstete Material ist chemisch inert und lebensmittelgeeignet. An der Oberfläche des Keramikscherbens bilden sich beim Brand über 800 °C Anatas- und Rutil-Pigmente als Variationen von Titandioxid. Diese Pigmente sind fotokatalytisch wirksam. Bei Lichtbeaufschlagung in Verbindung mit Luftsauerstoff und Luftfeuchtigkeit bilden sich freie reaktive Hydroxi- und Peroxi-Radikale. Diese freien Radikale reagieren mit ortsnahen organischen Verbindungen (wie z.B. Bakterien) und zerstören sie. Vorzugsweise wird der Keramikrohmasse ca. 2 % Titandioxid beigemischt, womit sich ein funktionaler, mikroskopisch sichtbarer Oberflächeneffekt durch Rutil- und Anatas-Pigmente einstellt. Die Pigmente sind in der Keramik gebunden und können nicht abgelöst bzw. ausgeschwemmt werden. Durch diese Maßnahme wirkt die verwendete Keramik bakterizid und erhöht damit die maximale Lagerdauer der Eier auf dem Eierlagerteller. Der Eierlagerteller wird im Gebrauch bevorzugt außerhalb eines Kühlschranks aufgestellt, was einerseits die Kühlung erspart und andererseits die Beaufschlagung mit Licht sicherstellt, um die erwähnte Fotokatalyse in Gang zu halten.

Bei einer weitergebildeten Ausführungsform grenzt an den Hochpunkt der Laufbahn eine obere Anlauffläche an, und an den Tiefpunkt grenzt eine untere Anlauffläche an. Die obere Anlauffläche verhindert vor allem das versehentliche Herunterfallen des Eies beim Auflegen am oberen Ende der Laufbahn. Die untere Anlauffläche verhindert vor allem, dass aufgelegte Eier die Laufbahn selbsttätig Verlassen. Besonders bevorzugt sind die beiden Anlaufflächen als gegenüberliegende Seite einer Erhebung ausgebildet, die zwischen dem Hochpunkt und dem Tiefpunkt platziert ist.

Gemäß einer vorteilhaften Ausführungsform ist die Innenkante der im Wesentlichen konvex geformten Laufbahn entlang ihrer gesamten Länge jeweils weiter von der Standfläche beabstandet als die ihr parallel gegenüberliegende Außenkante. Mit anderen Worten ist die Erhebung der Innenkante gegenüber der Standfläche vorzugsweise entlang des gesamten Verlaufs etwas größer als die Erhebung der Außenkante, bezogen auf eine Radiallinie, welche beide Kanten schneidet. Die konvexe Form der Laufbahn ist somit der ovoiden Form der Eier nachgebildet. Damit können die aufzulegenden Eier jeweils mit ihrem schmalen Ende zur Innenkante und dem breiten Ende zur Außenkante aufgelegt und in dieser Lage unterstützt werden. Der Platzbedarf der Eier auf der kreisförmigen Laufbahn wird damit minimiert.

Eine bevorzugte Ausführungsform besitzt eine Standfläche, die durch eine innere Standlinie, über der sich die innere Umfangsfläche erhebt, und durch eine äußere Standlinie, über der sich die äußere Umfangsfläche erhebt, definiert ist. Die Standfläche ist im Übrigen nach innen geöffnet, sodass vorzugsweise ein Hohlraum zwischen der Innenseite der Eierauflagefläche und den Umfangsflächen entsteht. Diese hohle Ausbildung dient vor allem der Materialeinsparung und Gewichtsreduktion.

Weitere Vorteile, Einzelheiten und Weiterbildungen der Erfindung ergeben sich aus der nachfolgenden Beschreibung einer bevorzugten Ausführungsform, unter Bezugnahme auf die Zeichnung. Es zeigen:
- Fig. 1: eine Draufsicht auf einen Eierlagerteller mit einem auf eine Laufbahn aufgelegten Ei;
- Fig. 2: eine Seitenansicht des Eierlagertellers gemäß Fig. 1, jedoch ohne aufgelegtes Ei.

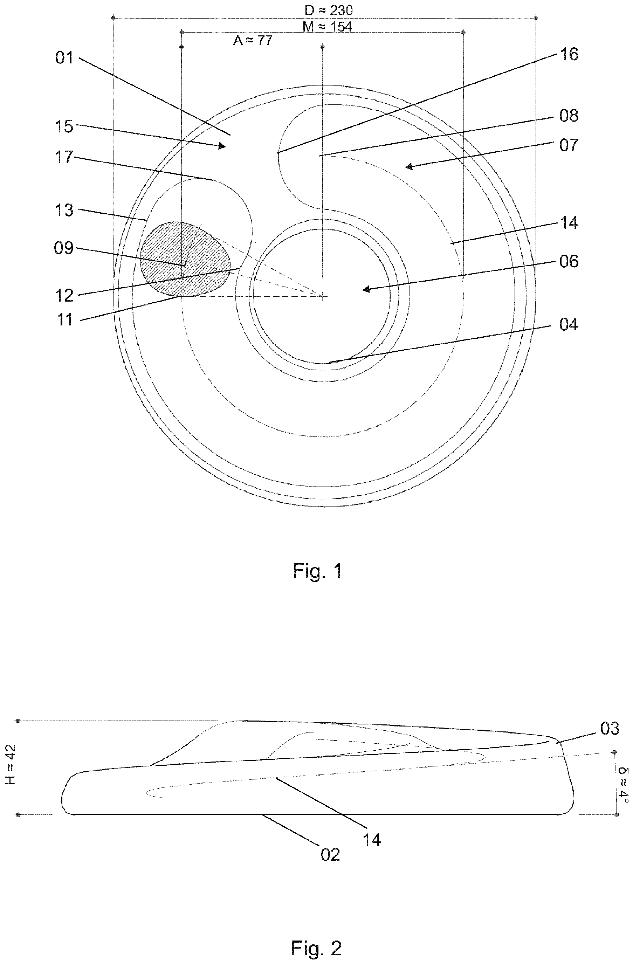

Fig. 1 zeigt eine bevorzugte Ausführungsform eines Eierlagertellers in einer Draufsicht, während Fig. 2 eine Seitenansicht zeigt. Nachfolgend wird diese Ausführungsform unter gleichzeitiger Bezugnahme auf beide Figuren beschrieben. Die in den Figuren angebrachten Maßlinien und Werte (in Millimeter bzw. Grad) dienen lediglich der Veranschaulichung bevorzugter Abmessungen und sollen nicht als notwendige Merkmale verstanden werden. Abweichungen in den Maßen sind möglich, soweit die Funktionsweise weiterhin erfüllt ist. Insbesondere wird eine maßliche Anpassung erforderlich, wenn der Eierlagerteller nicht für Hühnereier sondern beispielsweise für Wachteleier konfiguriert werden soll.

Der Eierlagerteller besitzt eine im Einsatzfall oben liegende Eierauflagefläche 01, eine dieser gegenüber liegende Standfläche 02, sowie eine äußere Umfangsfläche 03 und eine innere Umfangsfläche 04, die sich jeweils zwischen der Eierauflagefläche 01 und der Standfläche 02 erstrecken. Die Standfläche 02 ist vorzugsweise nicht geschlossen sondern nur im Bereich der Umfangsflächen ausgebildet. Die Umfangsflächen 03, 04 sind gegensinnig geneigt, beispielsweise mit einem Winkel von 80° bzw. 100° gegenüber der Standfläche. Die Grundform des Eierlagertellers entspricht einem Kegelstumpf mit einer inneren Ausnehmung 06. Bei einer maßlichen Anpassung des Eierlagertellers an die Lagerung von Hühnereiern betragen beispielsweise der Außendurchmesser D≈230mm und die Höhe H≈42mm.

Die Eierauflagefläche 01 wird überwiegend eingenommen von einer Laufbahn 07, die sich schraubenlinienförmig von einem Hochpunkt 08 bis zu einem Tiefpunkt 09 erstreckt. Zur Verdeutlichung ist in Fig. 1 ein einzelnes Ei 11 gezeigt, welches mit seiner Längsachse im Wesentlichen den Tiefpunkt 09 schneidet. Es ist ersichtlich, dass das schmale Ende des Eies 11 nach innen gerichtet ist, zu einer Innenkante 12 der Laufbahn 07, während das breite Ende des Eies nach außen gerichtet ist, zu einer Außenkante 13 der Laufbahn. Die Laufbahn 07 besitzt einen konvexen Querschnitt, wobei eine Mittellinie 14 in der Kehle der Laufbahn 07 verläuft. Die Innenkante 12 und die Außenkante 13 laufen parallel zur Mittellinie 14. Die Mittellinie 14 verläuft mit einem kontinuierlichen Gefälle von beispielsweise δ≈4°. Die Mittellinie 14 beschreibt eine Kreisbahn, beispielsweise mit einem Durchmesser M≈154mm, sodass zwischen dem Zentrum der Ausnehmung 06 und der Mittellinie 14 ein Radius R≈77mm besteht.

Entlang einer Radiuslinie betrachtet ist die Innenkante 12 geringfügig höher ausgeformt als die Außenkante 13, d.h. die Innenkante ist jeweils etwas mehr von der Standfläche 02 beabstandet als die Außenkante. Dadurch wird das schmale Ende des aufgelegten Eies 11 angehoben, sodass die Längsachse des Eies 11 etwa horizontal liegt, unabhängig von seiner Position auf der Laufbahn 07.

Zwischen dem Hochpunkt 08 und dem Tiefpunkt 09 befindet sich eine Erhebung 15, die den Höhenunterschied zwischen diesen Punkten ausgleicht. Die Erhebung 15 besitzt zwei der Laufbahn zugewandte Seitenflächen, die eine obere Anlauffläche 16 und eine untere Anlauffläche 17 bilden.

Der gesamte Eierlagerteller ist bei der dargestellten Ausführungsform einstückig aus gesinterter Keramik geformt. Der Keramikrohmasse wurde im Herstellungsprozess Titandioxid zugesetzt.

Wenn ein Ei 11 am Hochpunkt 08 auf den Eierlagerteller aufgelegt wird, rollte es aufgrund des Gefälles der Laufbahn 07 selbsttätig bis zum Tiefpunkt 09 bzw. bis zu einer Stelle, an welcher das Ei an ein bereits zuvor aufgelegtes Ei anstößt. Insgesamt lassen sich auf der Laufbahn 07 bei den beispielhaft genannten Maßen etwa 10-12 Hühnereier auflegen, abhängig von der Größe der Eier.

### Bezugszeichen

- 01: Eierauflagefläche
- 02: Standfläche
- 03: äußere Umfangsfläche
- 04: innere Umfangsfläche
- 05: --
- 06: Ausnehmung
- 07: Laufbahn
- 08: Hochpunkt
- 09: Tiefpunkt
- 10: --
- 11: Ei
- 12: Innenkante
- 13: Außenkante
- 14: Mittellinie
- 15: Erhebung
- 16: obere Anlauffläche
- 17: untere Anlauffläche

## Patentansprüche

1. Eierlagerteller mit einer Standfläche (02), einer Eierauflagefläche (01) und mindestens einer äußeren Umfangsfläche (03), welche sich zwischen der Standfläche (02) und der Eierauflagefläche (01) erstreckt, **dadurch gekennzeichnet, dass**:
- die Eierauflagefläche (01) eine Laufbahn (07) besitzt, die sich von einem Hochpunkt (08) bis zu einem Tiefpunkt (09) erstreckt, wobei in Richtung der Flächennormalen der Standfläche (02) der Hochpunkt (08) am weitesten und der Tiefpunkt (09) am wenigsten von der Standfläche (02) beabstandet ist;
- die Laufbahn (07) zwischen dem Hochpunkt (08) und dem Tiefpunkt (09) mit einem Gefälle ohne Unstetigkeitsstellen und ohne Umkehrpunkte verläuft;
- die Laufbahn (07) eine Krümmung besitzt, sodass die Mittellinie (14) der Laufbahn (07) in der Projektion auf die Standfläche (02) am Hochpunkt (08) radial nicht oder um nicht mehr als die Hälfte einer Laufbahnbreite gegenüber dem Tiefpunkt (09) versetzt ist;
- die Laufbahn (07) im Querschnitt im Wesentlichen konvex geformt ist und die Laufbahnbreite zwischen 80% bis 120% der Längserstreckung eines durchschnittlichen zu lagernden Eies (11) entspricht.

2. Eierlagerteller nach Anspruch 1, **dadurch gekennzeichnet, dass** die Laufbahn (07) an ihrer Außenkante (13) von der äußeren Umfangsfläche begrenzt ist und an ihrer Innenkante (12) von einer inneren Umfangsfläche begrenzt ist, die sich zwischen der Standfläche (02) und der Eierauflagefläche (01) erstreckt.

3. Eierlagerteller nach Anspruch 2, **dadurch gekennzeichnet, dass** die innere Umfangsfläche (04) eine zentrale Ausnehmung (06) umschließt.

4. Eierlagerteller nach Anspruch 3, **dadurch gekennzeichnet, dass** die innere und die äußere Umfangsfläche (03, 04) aufeinander zu geneigt sind, sodass sie einen Abschnitt eines Kegelstumpfes einschließen.

5. Eierlagerteller nach einem der Ansprüche 1 bis 4, **dadurch gekennzeichnet, dass** er einstückig aus einem keramischen Material geformt ist, insbesondere aus einer nicht-glasierten Keramik, deren Keramikrohmasse Titandioxid beigemischt wurde.

6. Eierlagerteller nach einem der Ansprüche 1 bis 5, **dadurch gekennzeichnet, dass** angrenzend an den Hochpunkt (08) eine obere Anlauffläche (16) ausgebildet ist und angrenzende an den Tiefpunkt (09) eine untere Anlauffläche (17) ausgebildet ist, die für aufgelegte Eier (11) ein selbsttätiges Verlassen der Laufbahn (07) verhindern.

7. Eierlagerteller nach einem der Ansprüche 1 bis 6, **dadurch gekennzeichnet, dass** das Gefälle zwischen Hochpunkt (08) und Tiefpunkt (09) kontinuierlich verläuft.

8. Eierlagerteller nach einem der Ansprüche 1 bis 7, **dadurch gekennzeichnet, dass** die Laufbahn (07) entlang einer Schraubenlinie mit gleichbleibender negativer Steigung zwischen Hochpunkt (08) und Tiefpunkt (09) verläuft.

9. Eierlagerteller nach einem der Ansprüche 1 bis 8, **dadurch gekennzeichnet, dass** die Mittellinie (14) der Laufbahn (07) in ihrer Projektion auf die Standfläche (02) kreisförmig verläuft.

10. Eierlagerteller nach einem der Ansprüche 1 bis 9, **dadurch gekennzeichnet, dass** die Innenkante (12) der im Wesentlichen konvex geformten Laufbahn (07) entlang ihrer gesamten Länge jeweils weiter von der Standfläche (02) beabstandet verläuft als die ihr parallel gegenüberliegende Außenkante (13).

11. Eierlagerteller nach einem der Ansprüche 1 bis 10, **dadurch gekennzeichnet, dass** die Standfläche (02) durch eine innere Standlinie, über der sich die innere Umfangsfläche (04) erhebt, und durch eine äußere Standlinie, über der sich die äußere Umfangsfläche (03) erhebt, definiert ist.

12. Eierlagerteller nach einem der Ansprüche 1 bis 11, **dadurch gekennzeichnet, dass** ein zur Standfläche (02) offener Hohlraum zwischen Innenseite der Eierauflagefläche (01) und den Umfangsflächen (03, 04) gebildet ist.
